# EUROPÄISCHE PATENTANMELDUNG

(11) **EP 2 325 519 A1**
(43) Veröffentlichungstag der Anmeldung: **25.05.2011**
(21) Anmeldenummer: 11158301.9
(22) Anmeldetag: 15.03.2011
(51) Int. Cl.: F16F 1/04

(54) **Federring mit gekippten Windungen**

(71) Anmelder: Baumann Federn AG, 8630 Rüti (CH)
(72) Erfinder: Hohl, Andreas, 8630, Rüti (CH); Kessler, Hans-Ueli, 8625, Gossau (CH); Grob, Pius, 8733, Eschenbach (CH)
(74) Vertreter: Troesch Scheidegger Werner AG

(57) **Zusammenfassung**

Ein Federring ist aus einem spiralförmigen Federstrang zu einem Ring geformt, dessen beide Enden des Stranges fest miteinander verbunden sind. Die Windungen des Federstranges sind im nicht montierten Zustand in der Ebene der einzelnen Windungen nicht kreisrund und weisen entlang im Wesentlichen des ganzen Federringes die gleiche Form und Grösse auf. Das heisst, die einzelnen Windungen sind entlang im Wesentlichen des ganzen Federringes deckungsgleich bzw. kongruent.

## Beschreibung

Die vorliegende Erfindung betrifft einen Federring gemäss dem Oberbegriff nach Anspruch 1 sowie ein Verfahren zu dessen Herstellung.

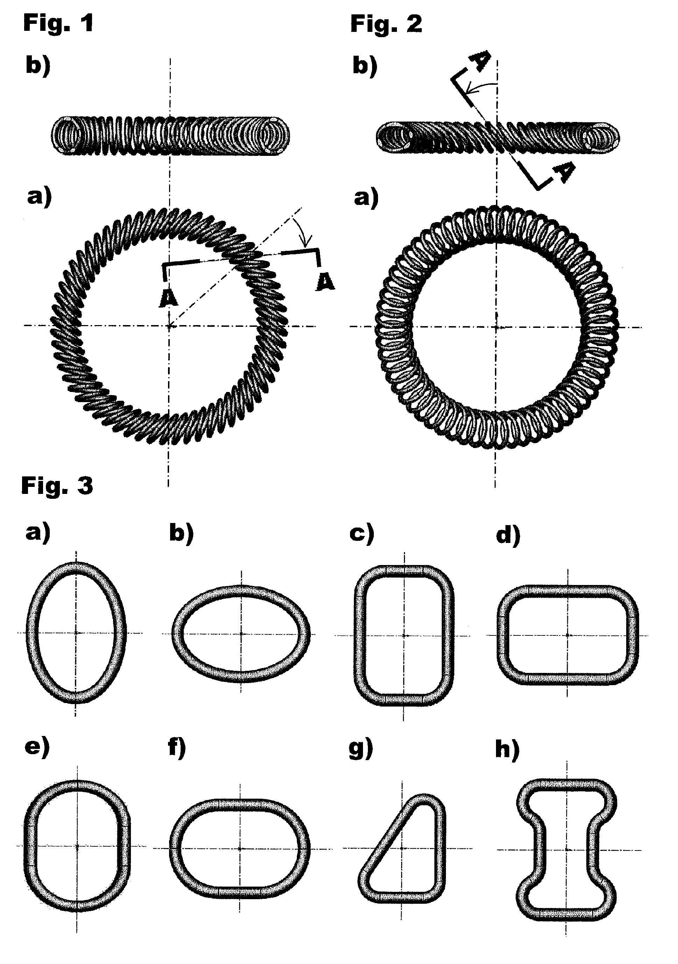

Ein Federring mit gekippten Windungen und nicht kreisrundem Windungsquerschnitt ermöglicht, im Gegensatz zu einem kreisrunden oder annähernd kreisrunden Windungsquerschnitt, gezielte Anpassungen seiner Eigenschaften an die Anforderungen seines Einsatzes. Insbesondere können Einbauverhältnisse, Anforderungen an Kraft, Weg, an Berührungspunkte oder Berührungslinien optimiert werden. Die Kippung der Windungen kann je nach Anwendung in unterschiedliche Richtungen sein. Bekannt sind radiale (Fig.1) und axiale (Fig.2) Verkippungen.

Federringe mit radial aus der radialen Richtung gekippten Windungen (Fig.1) werden vielfältig eingesetzt, etwa um einen Bolzen bzw. Achse in einer Bohrung zu führen oder zu fixieren, oder einen Bolzen mit einer Bohrung elektrisch zu verbinden.

Federringe mit axial aus der radialen Richtung gekippten Windungen (Fig.2) werden vielfältig eingesetzt um zwei parallel liegende Ebenen kraftschlüssig auf Druck zu verbinden. Das Element wirkt dabei als Druckfeder mit spezieller Federcharakteristik.

In der Regel wird ein radial gekipptes Federelement im Bolzen oder in der Bohrung in einer Nut eingelegt und axial positioniert. Das Gegenstück dazu kann glatt sein, so dass Bolzen und Bohrung mit kleinem Kraftaufwand wieder getrennt werden können. Es gibt auch Anwendungen bei denen auch im Gegenstück eine Nut vorhanden ist, in welcher der Federring beim Zusammenfahren einrastet. Die Nut im Gegenstück kann so gestaltet sein, dass die Verbindung mit definiertem Kraftaufwand ohne Deformation des Federringes wieder lösbar ist. Die Nut kann aber auch so gestaltet sein, dass die Verbindung ohne Zerstörung nicht lösbar ist.

Dazu sind ausführliche Patentschriften bekannt, wie beispielsweise die US 4 655 462, die DE 3 539 608 sowie die US 4 678 210.

Diesen Erfindungen gemeinsam ist, dass die gekippten Windungen aus Richtung der Mittellinie der Ringfeder einen ovalen Querschnitt aufweisen, und aus Richtung senkrecht zur Windungsebene (Schnitt A-A in Fig.1 und Fig.2) einen kreisförmigen oder nahezu kreisförmigen Querschnitt haben.

Aufgabe der vorliegenden Erfindung ist einen Federring vorzuschlagen, welcher eine weitere Optimierung an die Anforderungen seines Einsatzes, insbesondere bezüglich Einbauverhältnisse, Anforderungen an Kraft, Weg, Berührungspunkte etc. ermöglicht.

Vorgeschlagen wird ein Federring gemäss dem Wortlaut nach Anspruch 1.

Ein Wesen der neuen Erfindung ist, dass der Querschnitt auch senkrecht zur Windungsebene nicht kreisförmig ist. Dieser Querschnitt kann vielfältiger Art sein, so zum Beispiel elliptisch, rechteckig oder quadratisch mit kleinem oder grossem Eckradius, polygonförmig mit drei oder mehr Ecken oder eine knochenförmige Form. Es sind auch andere Formen denkbar. Dies ermöglicht eine viel variablere Gestaltung des Höhen-, Breitenverhältnisses des besagten Federringes mit gekippten Windungen. Insbesondere kann der Querschnitt in der gekippten Windung des Federringes mit einem kleinen Höhen-, Breitenverhältnis gestaltet sein und so die radiale bzw. axiale Ausdehnung des Federringes verkleinern. Es sind aber auch Federringe mit grossem Höhen-, Breitenverhältnis machbar, um z.B. den Federweg des Elementes zu erhöhen.

Im US 7 055 812 werden ähnliche Querschnittformen wie in der vorliegenden Erfindung beschrieben. Der Unterschied besteht darin, dass die US 7 055 812 ein Ringfederelement mit abschnittweisen Elementen mit unterschiedlichem Querschnitt und Anordnungen dieser Elemente beschreibt, währenddessen die vorliegende Erfindung die gleiche Windungsform über den ganzen Umfang des Ringfederelementes anwendet, weil die neue Erfindung die gleichen, gleichmässigen Eigenschaften über den ganzen Umfang des Ringfederelementes aufweisen will. Mit anderen Worten sind die Windungen des Federringes im nicht montierten Zustand in der Ebene der einzelnen Windungen nicht kreisrund und entlang im Wesentlichen des ganzen Federringes weisen sie die gleiche Form und Grösse auf. Mit anderen Worten, die Windungen sind entlang des ganzen Federringes deckungsgleich bzw. kongruent.

Weiter vorgeschlagen wird ein Verfahren zur Herstellung eines Federringes der erfindungsgemässen Art. Vorgeschlagen wird, dass der Federstrang und die Form der Windungen durch Wickeln auf einen Dorn hergestellt werden, wobei allerdings auch dornloses Wickeln möglich ist. Die Form der Windungen kann auch durch nachträgliches Verkippen eines Federstranges mit nicht kreisrundem Querschnitt hergestellt werden.

Die Erfindung wird nun beispielsweise und unter Bezug auf die beigefügten Figuren näher erläutert.

Dabei zeigen:
Figuren 1a und 1b sowie Figuren 2a und 2b Federringe der bekannten Art, mit radialen und axialen Verkippungen,
Figuren 3a bis 3h Beispiele von Windungsformen erfindungsgemässer Federringe mit nicht kreisrunden Windungsquerschnitten,
Figur 4 bis Figur 7 zeigen in Perspektive mögliche Ausführungsvarianten eines erfindungsgemässen Federringes,
Figuren 8a und 8b im Schnitt einen erfindungsgemässen Federring montiert zwischen Bohrung und Dorn, eingeführt in einer im Dorn angeordneten umlaufenden Nut, und
Figuren 9a und 9b einen erfindungsgemässen Federring montiert zwischen Bohrung und Dorn, eingeführt in einer umlaufenden Nut ausgebildet in der Bohrung.

Figur 1 zeigt einen Federring der bekannten Art mit radial aus der radialen Richtung gekippten Windungen. Dabei zeigt Figur 1a den Federring in Obendraufsicht und Figur 1b den halben Federring in Seitenansicht.

Federring gemäss Figur 2 zeigt mit axial aus der radialen Richtung gekippten Windungen, wiederum Figur a in Obendraufsicht und Figur b den halben Federring in seitlicher Ansicht. Durch die axiale Verkippung ergibt sich ein ovaler Querschnitt in der Darstellung gemäss Figur 2b, entlang der Schnittlinie A-A; jedoch ist der Windungsquerschnitt kreisrund.

In den Figuren 3a bis 3h sind Beispiele von Windungsquerschnitten unterschiedlich verkippter Federringe dargestellt mit nicht kreisrunden Windungsquerschnitten. Der Windungsquerschnitt kann beispielsweise oval sein (Fig. 3a und 3b), rechteckförmig (Fig. 3c und 3d) oder kann andere x-beliebige Formen aufweisen.

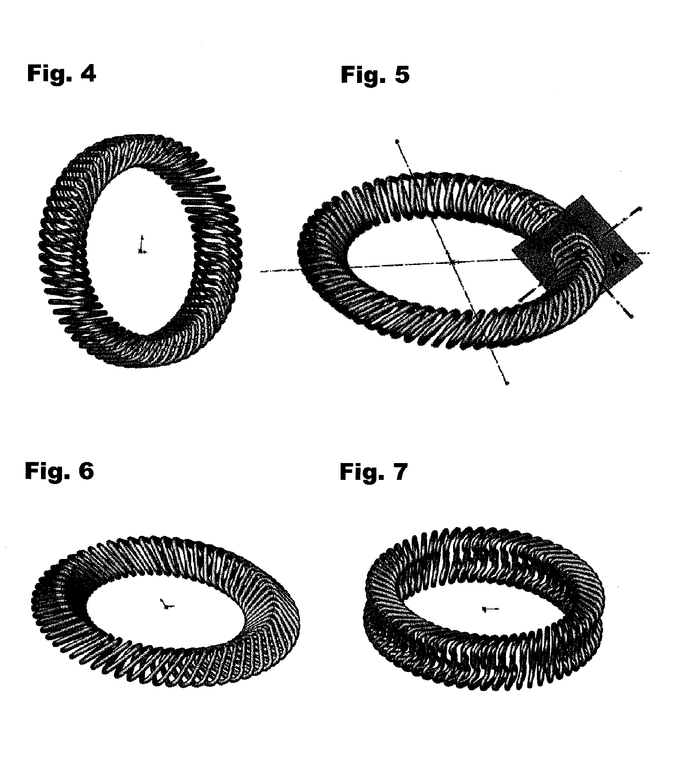

In den Figuren 4 bis 7 sind in Perspektive erfindungsgemässe Federringe dargestellt, aufweisend unterschiedliche Querschnitte der einzelnen Windungen. Durch die Ausgestaltung der unterschiedlichen Windungsquerschnitte ist es nun möglich, gezielte Anpassungen der Eigenschaften der Federringe an die Anforderungen ihres Einsatzes vorzunehmen.

Die Herstellung der erfindungsgemässen Federringe kann unterschiedlich erfolgen. Die wohl bekannteste Methode ist den Federstrang aus dem schliesslich der Federring hergestellt wird und die Form der Windungen durch Wickeln auf einen Dorn zu erzeugen. Selbstverständlich ist es aber auch möglich, die entsprechenden Formen der Windungen eines Federstranges durch dornloses Wickeln zu erzeugen. Die Form der Windungen kann aber auch durch nachträgliches Verkippen eines Federstranges mit nicht kreisrundem Querschnitt erzeugt werden.

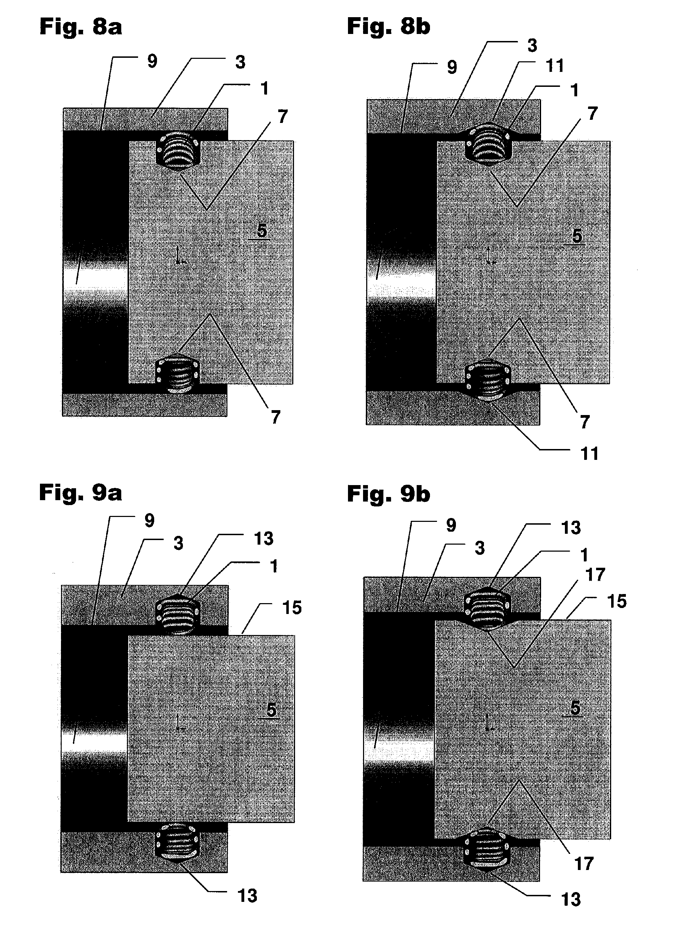

In Figur 8a ist ein erfindungsgemässer Federring 1 zwischen einer Bohrung bzw. Hülse 3 und einem Dorn 5 angeordnet, wobei der Federring in einer umlaufenden Nut 7 des Dorns 5 eingeführt ist. Die innere Wandung 9 der Bohrung ist dabei glatt ausgebildet.

Der Dorn mit dem in der Nut 7 verlaufenden Federring kann in eine glatte Bohrung eingeführt sein, wobei der Innendurchmesser der glatten Hülse kleiner ist als der Durchmesser des montierten Federringes.

In der Anordnung gemäss Figur 8b ist der Federring 1 wiederum in einer umlaufenden Nut 7 des Dorns 5 eingeführt, jedoch weist die innere Wandung 9 der Bohrung 3 eine umlaufende Nut 11 auf, in welcher Nut der Federring einrastet.

Im Gegensatz zu den Figuren 8a und 8b ist nun eine umlaufende Nut 13 in der Innenwandung 9 der Bohrung 3 ausgebildet, in welcher eingeführt der Federring 1 dargestellt ist.

In Figur 9a ist dabei die äussere Wandung des Dorns 5 glatt ausgebildet, währenddem in der Darstellung gemäss Figur 9b der Federring 1 wiederum in einer umlaufenden Nut 17 in der äusseren Wandung des Dorns 5 einrastet.

Im Falle des Anordnens einer Hülse mit in umlaufender Nut angeordnetem Federring auf einem glatten Dorn, weist der glatte Dorn einen Durchmesser auf, grösser als der Innendurchmesser des montierten Federringes.

Die umlaufenden Nuten können dergestalt sein, dass der Federring nicht mehr gelöst werden kann, oder aber mit einer definierten Kraft wieder gelöst wird. Es ist auch möglich, statt einem Federring auch mehrere Federringe nebeneinander, beispielsweise in getrennten Nuten, zu montieren. Der Federring kann auch axial zwischen zwei Gegenstücken eingespannt sein und der Federring auf diese Gegenstücke eine Federkraft F ausüben.

Die in den Figuren 8 und 9 verwendeten Federringe weisen erfindungsgemäss einen nicht kreisrunden Querschnitt auf. Deutlich erkennbar ist ein wenigstens teilweise eckiger Querschnitt der Windungen der dargestellten Federringe.

Bei den Darstellungen in den Figuren 3 bis 9 handelt es sich selbstverständlich nur um Beispiele zur besseren Erläuterung der vorliegenden Erfindung. Selbstverständlich können auch andere Formen für die Herstellung eines erfindungsgemässen Federringes verwendet werden. Wesentlich für die Erfindung ist, dass der Querschnitt der Windungen des Federringes im nicht montierten Zustand in der Ebene der einzelnen Windungen nicht kreisrund ist. Weiter wesentlich ist, dass entlang des gesamten Federringes die Windungen dieselbe Form aufweisen sowie die gleiche Grösse, das heisst, dass die Windungen deckungsgleich bzw. kongruent entlang des ganzen Federringes sind.

## Patentansprüche

1. Federring aus einem spiralförmigen Federstrang zu einem Ringe geformt, dessen beide Enden des Stranges miteinander fest verbunden sind, **dadurch gekennzeichnet, dass** die Windungen des Federstranges im nicht montierten Zustand in der Ebene der einzelnen Windungen nicht kreisrund sind und entlang im wesentlichen des ganzen Federringes die gleiche Form und Grösse aufweisen, das heisst deckungsgleiche bzw. kongruente Windungen aufweisen.

2. Federring nach Anspruch 1, **dadurch gekennzeichnet, dass** die Windungen oval wie beispielsweise elliptisch sind.

3. Federring nach einem der Ansprüche 1 oder 2, **dadurch gekennzeichnet, dass** das Verhältnis in den Windungen von Höhe zu Breite < 0,95 ist oder > 1,05.

4. Federring nach Anspruch 1, **dadurch gekennzeichnet, dass** die Windungen quadratisch oder rechteckig sind, mit engen oder grossen Eckradien.

5. Federring nach einem der Ansprüche 1 bis 4, **dadurch gekennzeichnet, dass** die beiden Enden des Stranges miteinander fest verbunden sind, durch Schweissen, Löten, Kleben mit einem Klammerelement oder einer anderen Verbindungsart.

6. Federring nach einem der Ansprüche 1 bis 5, **dadurch gekennzeichnet, dass** die beiden Enden des Federstranges stumpf oder überlappend miteinander verbunden sind.

7. Federring nach einem der Ansprüche 1 bis 6, **dadurch gekennzeichnet, dass** die Windungen des Federringes radial oder axial aus der radialen Richtung gekippt sind.

8. Federring nach einem der Ansprüche 1 bis 7, **dadurch gekennzeichnet, dass** die Windungen eine polygone Form mit drei oder mehr abgerundeten Ecken, eine knochenförmige Form oder eine andere nicht kreisförmige Form aufweisen.

9. Federring nach einem der Ansprüche 1 bis 8 oder 9, **dadurch gekennzeichnet, dass** die axiale Federkraft und der Federweg mit der axialen Verkippung der Windungen einstellbar ist.

10. Federring nach einem der Ansprüche 1 bis 9, **dadurch gekennzeichnet, dass** die Windungen des Federringes in eine beliebige Richtung aus der radialen Richtung gekippt sind.

11. Federring nach einem der Ansprüche 1 bis 10, **dadurch gekennzeichnet, dass** radiale und axiale Federkräfte und Federwege mit der Stärke und Richtung der Verkippung der Windungen einstellbar sind.

12. Verfahren zum Herstellen eines Federringes nach einem der Ansprüche 1 bis 11, **dadurch gekennzeichnet, dass** die Form der Windung hergestellt wird durch Wickeln auf einen Dorn oder, dass der Federstrang und die Form der Windung durch dornloses Wickeln hergestellt wird.

13. Verfahren zur Herstellung eines Federringes nach einem der Ansprüche 1 bis 11, **dadurch gekennzeichnet, dass** die Form der Windungen durch nachträgliches Verkippen des Federringes mit nicht kreisrundem Querschnitt hergestellt wird.

14. Anordnung zum Verbinden einer Hülse mit einem Dorn eines Maschinenelementes mit einem Federring nach einem der Ansprüche 1 bis 12, **dadurch gekennzeichnet, dass** der Federring in einer Nut eines Dornes angeordnet ist, welcher mit einer umlaufenden Nut ausgestattet ist und/oder in einer Nut der Hülse angeordnet ist, welche mit einer umlaufenden Nut ausgestattet ist.

15. Anordnung nach Anspruch 14, **dadurch gekennzeichnet, dass** entweder die Hülse mit in umlaufender Nut montiertem Federring auf einem glatten Dorn montiert ist, mit einem Durchmesser grösser als der Innendurchmesser des montierten Federringes, oder dass der Dorn mit in umlaufender Nut angeordnetem Federring in eine glatte Bohrung eingeführt ist, wobei der Innendurchmesser der glatten Hülse bzw. Bohrung kleiner ist als der Durchmesser des montierten Federringes.

16. Anordnung nach einem der Ansprüche 14 oder 15, **dadurch gekennzeichnet, dass** statt einem Federring mehrere Federringe nebeneinander in getrennten Nuten angeordnet sind.
